# EUROPÄISCHE PATENTANMELDUNG

(11) **EP 1 467 428 A1**
(43) Veröffentlichungstag der Anmeldung: **13.10.2004**
(21) Anmeldenummer: 04100650.3
(22) Anmeldetag: 19.02.2004
(51) Int. Cl.: H01M 8/24, H01M 8/02, H01M 2/00, C08L 67/02, F16L 11/04

(54) **Leitungssystem für Fluide in einer Brennstoffzelle**

(30) Priorität: 11.04.2003 DE 10316996
(71) Anmelder: Degussa AG, 40474 Düsseldorf (DE)
(72) Erfinder: Schmitz, Guido, Dr., 48249 Dülmen (DE); Häger, Harald, Dr., 45655 Recklinghausen (DE); Ries, Hans, Dr., 45772 Marl (DE); Farges, Olivier, 45768 Marl (DE)

(57) **Zusammenfassung**

Ein Element eines Leitungssystems einer Brennstoffzelle, das dadurch gekennzeichnet ist, dass der Teil, der mit dem geförderten Medium in Kontakt steht, aus einer Polyesterformmasse besteht und darüber hinaus mindestens eine weitere Schicht vorhanden ist, die ausgewählt ist aus
a) einer Schicht II aus einer Polyamidformmasse,
b) einer Schicht III aus einer Formmasse aus einem funktionalisierten Polyolefin,
c) einer Schicht IV aus einer Polyolefinformmasse, bei der das Polyolefin nicht funktionalisiert ist
   sowie
d) einer Schicht V aus einer EVOH-Formmasse,
lässt sich kostengünstig herstellen, hat eine gute Sperrwirkung gegenüber dem geförderten Medium und setzt weitestgehend keine Komponenten frei, die den Katalysator vergiften oder polarisieren.

## Beschreibung

Gegenstand der Anmeldung ist ein Element eines Leitungssystems einer Brennstoffzelle, das mit Fluiden und Gasen in Kontakt kommt.

Die sich immer weiter verschärfende Umweltgesetzgebung zwingt die Hersteller von Kraftfahrzeugen dazu, über neue Antriebskonzepte nachzudenken, da gerade auch NOₓ-Emissionen immer stärker in den Focus des Gesetzgebers geraten. Ein mögliches alternatives Antriebskonzept stellt die Brennstoffzelle dar.

Brennstoffzellen sind in einer Vielzahl von Ausführungsformen seit langem Stand der Technik. Ihnen ist gemeinsam, dass dem Anodenraum ein Brennstoff und dem Kathodenraum Luft oder Sauerstoff zugeführt wird. Diese Reaktanden werden an den Elektroden katalytisch umgesetzt. Als Brennstoff können Wasserstoff, Methanol, Glykol, Methan, Butan, höhere Kohlenwasserstoffe usw. eingesetzt werden, jedoch werden nur bei ersterem so hohe Stromdichten erzielt, dass eine annähernd bei Raumtemperatur arbeitende Brennstoffzelle für den Antrieb eines Kraftfahrzeugs eingesetzt werden kann. Die übrigen Brennstoffe lassen sich nur in einer Mittel- oder Hochtemperaturbrennstoffzelle befriedigend umsetzen, was sich aber in erster Linie für stationäre Anlagen anbietet. In einem Kraftfahrzeug mit Elektroantrieb, das seinen Strom von einem Brennstoffzellenaggregat bezieht, welches mit Methanol oder Kohlenwasserstoffen betrieben werden soll, wird daher der Brennstoff üblicherweise in einem Reformer mit Wasserdampf bei höherer Temperatur zu Wasserstoff und Kohlendioxid umgesetzt, das Reaktionsgas vom Nebenprodukt Kohlenmonoxid befreit und das Wasserstoff-CO₂-Gemisch in den Anodenraum geleitet. Derzeit wird hierfür die "proton exchange membrane fuel cell" favorisiert, bei der sich zwischen den porösen, katalysatorhaltigen Elektroden eine wassergesättigte saure Ionenaustauschermembran befindet. Jedoch wird auch für mobile Anwendungen an der Direktoxidation von Methanol gearbeitet, was einen Reformer überflüssig machen würde.

Bislang wurden die Leitungen für die Zuführung von Brennstoff üblicherweise aus Edelstahl hergestellt. Derartige Leitungen sind jedoch teuer.

Aus der JP 2002-213659 A sind Leitungen für Wasserstoff bekannt, die aus einer Polyolefininnenschicht, einer EVOH-Zwischenschicht und einer Polyamidaußenschicht bestehen. Das Problem der im allgemeinen fehlenden Haftung zwischen derartigen Schichten wird dort ansatzweise erkannt, indem die Verwendung eines nicht näher bezeichneten Klebstoffs angesprochen wird.

Demgegenüber stellte sich die Aufgabe, ein Element eines Leitungssystems einer Brennstoffzelle zur Verfügung zu stellen, das eine verbesserte Sperrwirkung gegenüber Kohlenwasserstoffen, Alkoholen und Wasserstoff besitzt und bei dem darüber hinaus die einzelnen Schichten von sich aus fest aufeinander haften.

Zudem sollte absolut sichergestellt sein, dass aus dem Material des Leitungssystems weitestgehend keine Komponenten herausgelöst werden, die mit dem Elektrolyten oder dem Anodenmaterial reagieren können, um eine Vergiftung des Katalysators oder eine unerwünschte Polarisierung zu verhindern.

In der nicht vorveröffentlichten europäischen Patentanmeldung Nr. 02 018 541.9 wird ein Element eines Leitungssystems einer Brennstoffzelle beschrieben, bei dem der Teil, der mit dem geförderten Medium in Kontakt steht, aus einer Polyesterformmasse besteht. Hiervon ausgehend wurde die obengenannte Aufgabe durch ein Element eines Leitungssystems einer Brennstoffzelle gelöst, bei dem
- die innerste Schicht I, die mit dem geförderten Medium in Kontakt steht, aus einer Polyesterformmasse besteht,
- darüber hinaus mindestens eine weitere Schicht vorhanden ist, die ausgewählt ist aus
   a) einer Schicht II aus einer Polyamidformmasse,
   b) einer Schicht III aus einer Formmasse aus einem funktionalisierten Polyolefin,
   c) einer Schicht IV aus einer Polyolefinformmasse, bei der das Polyolefin nicht funktionalisiert ist sowie
   d) einer Schicht V aus einer EVOH-Formmasse.

Derartige Elemente sind beispielsweise ein Rohr oder ein rohrartiges Formteil, das ein Mehrschichtrohr sein kann, bei dem die innerste Schicht aus der Polyesterformmasse besteht. Ein derartiges Rohr oder rohrartiges Formteil kann entweder als Glattrohr, das anschließend gegebenenfalls thermogeformt wird, oder als Wellrohr hergestellt werden. Weiterhin sind solche Bauteile zu nennen, in denen Fluide gelagert werden, etwa Vorratsgefäße. Weitere Elemente sind beispielsweise Anbindungselemente, etwa sogenannte Quickconnectoren, Adaptoren, Filter, Bauteile in Pumpen oder Bauteile in Ventilen.

Die erfindungsgemäßen Elemente können mit Hilfe der üblichen Verfahren zur Kunststoffverarbeitung hergestellt werden, beispielsweise mittels Coextrusion (z. B. Mehrschichtrohr), Blasformen bzw. Sonderformen hiervon wie Saugblasformen oder 3D-Schlauchmanipulation, wobei der Vorformling coextrudiert wird, Spritzgießen sowie Sonderverfahren hiervon wie z. B. Fluid Injections-Technik, oder Rotationssintern.

Das erfindungsgemäße Element kann beispielsweise von außen nach innen folgenden Schichtenaufbau besitzen:
II/I
II/Haftvermittler/I
III/II//Haftvermittler/I
IV/III/II/Haftvermittler/I
IV/Haftvermittler/I
II/V/II/Haftvermittler/I
II/III/V/III/II/Haftvermittler/I
III/I
IV/III/I
IV/III/V/III/I
II/V/Haftvermittler/I

Thermoplastische Polyester werden durch Polykondensation von Diolen mit Dicarbonsäuren bzw. deren polyesterbildenden Derivaten wie Dimethylestern hergestellt. Geeignete Diole haben die Formel HO-R-OH, wobei R einen divalenten, verzweigten oder unverzweigten aliphatischen und/oder cycloaliphatischen Rest mit 2 bis 40, vorzugsweise 2 bis 12, C-Atomen darstellt. Geeignete Dicarbonsäuren haben die Formel HOOC-R'-COOH, wobei R' einen divalenten aromatischen Rest mit 6 bis 20, vorzugsweise 6 bis 12, C-Atomen bedeutet.

Als Beispiel für Diole seien Ethylenglykol, Trimethylenglykol, Tetramethylenglykol, 2-Butendiol-1.4, Hexamethylenglykol, Neopentylglykol, Cyclohexandimethanol sowie das C₃₆-Diol Dimerdiol genannt. Die Diole können alleine oder als Diolgemisch eingesetzt werden.

Als aromatische Dicarbonsäuren kommen z. B. Terephthalsäure, Isophthalsäure, 1.4-, 1.5-, 2.6- bzw. 2.7-Naphthalindicarbonsäure, Diphensäure und Diphenylether-4.4'-dicarbonsäure infrage. Bis zu 30 Mol-% dieser Dicarbonsäuren und bevorzugt bis zu 10 Mol-% können durch aliphatische oder cycloaliphatische Dicarbonsäuren mit 3 bis 50 C-Atomen und bevorzugt mit 6 bis 40 C-Atomen wie z. B. Bernsteinsäure, Adipinsäure, Sebacinsäure, Dodecandisäure oder Cyclohexan-1.4-dicarbonsäure ersetzt sein.

Beispiele für geeignete Polyester sind Polyethylenterephthalat, Polypropylenterephthalat, Polybutylenterephthalat, Polyethylen-2.6-naphthalat, Polypropylen-2.6-naphthalat, Polybutylen-2.6-naphthalat, Poly(1.4-dimethylencyclohexanterephthalat) und Poly(1.4-dimethylencyclohexan-2.6-naphthalat).

Die Herstellung dieser Polyester gehört zum Stand der Technik (DE-OSS 24 07 155, 24 07 156; Ullmanns Encyclopädie der technischen Chemie, 4. Aufl., Bd. 19, Seiten 65 ff., Verlag Chemie, Weinheim, 1980).

Als besonders geeignet haben sich Polyester herausgestellt, die nicht mehr als 300 ppm, bevorzugt nicht mehr als 150 ppm, besonders bevorzugt nicht mehr als 100 ppm und ganz besonders bevorzugt nicht mehr als 50 ppm, jeweils bezogen auf den Metallgehalt, einer die Umesterung und/oder die Veresterung katalysierenden Metallverbindung oder deren Umwandlungsprodukte enthalten, auch wenn der Grund hierfür nicht klar ist.

Die Polyesterformmasse kann bis zu etwa 40 Gew.-% andere Thermoplaste enthalten, insbesondere schlagzähmodifizierende Kautschuke. Darüber hinaus kann sie die für Polyester üblichen Hilfs- und Zusatzstoffe enthalten wie z. B. Verarbeitungshilfsmittel, Nukleierungsmittel, interkalierte oder exfolierte Schichtsilikate, Kristallisationsbeschleuniger, Licht- bzw. Wärmestabilisatoren, Metallfänger bzw. Komplexbildner, leitfähigkeitserhöhende Additive wie Ruß, Kohlenstofffasern, Stahlfasern, Nanotubes etc., Verstärkungsadditive wie z. B. Glasfasern, oder Pigmente.

Diese Additive müssen so ausgewählt werden, dass sie die Leitfähigkeit des Mediums, das an der Polyesterformmasse vorbeigeleitet wird, nicht oder nur in geringem Maße erhöhen. Falls Wasser als Medium verwendet wird, sollte sich die Leitfähigkeit bei 90 °C nur um maximal 100 µS/cm, bevorzugt maximal 50 µS/cm und besonders bevorzugt maximal 30 µS/cm erhöhen. Wird ein Gemisch aus Wasser und Methanol (60 : 40 Vol-%) verwendet, sollte sich die Leitfähigkeit bei 90 °C nur um maximal 80 µS/cm, bevorzugt maximal 40 µS/cm und besonders bevorzugt maximal 20 µS/cm erhöhen.

In der Regel besitzt die Polyesterformmasse eine kontinuierliche Polyesterphase, wobei es bevorzugt ist, dass die gesamte Matrix aus Polyester besteht und die übrigen Komponenten hierin dispergiert sind.

In einer bevorzugten Ausführungsform ist die Polyesterformmasse mittels der oben genannten leitfähigkeitserhöhenden Additive antielektrostatisch ausgerüstet, so dass beim Transport brennbarer Medien auftretende elektrostatische Aufladungen sicher abgeleitet werden können. In diesem Fall sind das Leitungssystem und die Anode, wie im Falle der bisher verwendeten Edelstahlleitungen, durch ein isolierendes Element voneinander getrennt.

Geeignete Polyamide sind dem Fachmann bekannt und in vielen Typen handelsüblich. Beispielsweise können PA46, PA66, PA68, PA610, PA612, PA88, PA810, PA1010, PA1012, PA1212, PA6, PA7, PA8, PA9, PA10, PA11, PA12, hierauf basierende Copolyamide, verzweigte Polyamin-Polyamid-Copolymere sowie Mischungen hiervon verwendet werden. Hinsichtlich geeigneter Homo- und Copolyamide sowie geeigneter Polyamin-Polyamid-Copolymere sei auf die EP-A-1 216 826 sowie auf die EP-A-1 216 823 verwiesen, deren Offenbarung ausdrücklich mit einbezogen ist.

Die eingesetzten Polyamidformmassen können maximal etwa 50 Gew.-% Zusatzstoffe enthalten, die ausgewählt sind aus schlagzähmachendem Kautschuk und/oder üblichen Hilfs- bzw. Zuschlagstoffen.

Schlagzähmachende Kautschuke für Polyamidformmassen sind Stand der Technik. Sie enthalten funktionelle Gruppen, die von ungesättigten funktionellen Verbindungen herrühren, die entweder in die Hauptkette einpolymerisiert oder auf die Hauptkette aufgepfropft wurden. Am gebräuchlichsten sind EPM- oder EPDM-Kautschuk, der mit Maleinsäureanhydrid radikalisch gepfropft wurde. Derartige Kautschuke können auch zusammen mit einem unfunktionalisierten Polyolefin wie z. B. isotaktischem Polypropylen eingesetzt werden, wie in der EP-A-0 683 210 beschrieben.

Daneben können die Formmassen noch kleinere Mengen von Hilfs- bzw. Zuschlagstoffen enthalten, die zum Einstellen bestimmter Eigenschaften benötigt werden. Beispiele hierfür sind Weichmacher, Pigmente bzw. Füllstoffe wie Ruß, Titandioxid, Zinksulfid, Silikate oder Carbonate, Verarbeitungshilfsmittel wie Wachse, Zinkstearat oder Calciumstearat, Flammschutzmittel wie Magnesiumhydroxid, Aluminiumhydroxid oder Melamincyanurat, Glasfasern, Antioxidantien, UV-Stabilisatoren sowie Zusätze, die dem Produkt antielektrostatische Eigenschaften oder eine elektrische Leitfähigkeit verleihen wie z. B. Kohlenstofffasern, Graphitfibrillen, Fasern aus rostfreiem Stahl bzw. Leitfähigkeitsruß.

In einer möglichen Ausführungsform enthalten die Formmassen 1 bis 25 Gew.-% Weichmacher, besonders bevorzugt 2 bis 20 Gew.-% und insbesondere bevorzugt 3 bis 15 Gew.-%.

Weichmacher und ihr Einsatz bei Polyamiden sind bekannt. Eine allgemeine Übersicht über Weichmacher, die für Polyamide geeignet sind, können Gächter/Müller, Kunststoffadditive, C. Hanser Verlag, 2. Ausgabe, S. 296 entnommen werden.

Als Weichmacher geeignete, übliche Verbindungen sind z. B. Ester der p-Hydroxybenzoesäure mit 2 bis 20 C-Atomen in der Alkoholkomponente oder Amide von Arylsulfonsäuren mit 2 bis 12 C-Atomen in der Aminkomponente, bevorzugt Amide der Benzolsulfonsäure.

Als Weichmacher kommen u. a. p-Hydroxybenzoesäureethylester, p-Hydroxybenzoesäureoctylester, p-Hydroxybenzoesäure-i-hexadecylester, Toluolsulfonsäure-n-octylamid, Benzolsulfonsäure-n-butylamid oder Benzolsulfonsäure-2-ethylhexylamid infrage.

Beim Polyolefin der Schichten III bzw. IV handelt es sich beispielsweise um Polyethylen oder um Polypropylen. Grundsätzlich kann jeder handelsübliche Typ eingesetzt werden. So kommen beispielsweise in Frage: Lineares Polyethylen hoher, mittlerer oder niedriger Dichte, LDPE, isotaktisches oder ataktisches Homopolypropylen, Randomcopolymere von Propen mit Ethen und/oder Buten-1, Ethylen-Propylen-Blockcopolymere und dergleichen mehr. Das Polyolefin kann auch eine Schlagzähkomponente wie z.B. EPM- oder EPDM-Kautschuk oder SEBS enthalten. Darüber hinaus können die üblichen Hilfs- und Zusatzstoffe enthalten sein. Das Polyolefin kann nach jedem bekannten Verfahren hergestellt werden, beispielsweise nach Ziegler-Natta, nach dem Phillips-Verfahren, mittels Metallocenen oder radikalisch.

Die Formmasse der Schicht IV kann entsprechend dem Stand der Technik vernetzt werden, um so eine Verbesserung der mechanischen Eigenschaften, z.B. der Kälteschlagzähigkeit, der Wärmeformbeständigkeit oder der Kriechneigung, oder der Permeabilität zu erzielen. Die Vernetzung erfolgt beispielsweise durch Strahlenvernetzung oder mittels Feuchtevernetzung von silangruppenhaltigen Polyolefinformmassen.

Als funktionelle Gruppen, die im Polyolefin der Schicht III enthalten sind, eignen sich z.B. Säureanhydridgruppen, N-Acyllactamgruppen, Carbonsäuregruppen, Epoxidgruppen, Oxazolingruppen, Trialkoxysilangruppen oder Hydroxylgruppen. Die funktionellen Gruppen können hierbei entweder durch Copolymerisation eines geeigneten Monomeren zusammen mit dem Olefin oder durch eine Pfropfreaktion eingebracht werden. Bei der Pfropfreaktion wird ein vorgebildetes Polyolefin auf bekannte Weise mit einem ungesättigten, funktionellen Monomeren und vorteilhafterweise einem Radikalspender bei erhöhter Temperatur umgesetzt.

EVOH ist seit langem bekannt. Es ist ein Copolymer aus Ethylen und Vinylalkohol und wird manchmal auch als EVAL bezeichnet. Der Ethylengehalt im Copolymeren beträgt in der Regel 25 bis 60 Mol-% und insbesondere 28 bis 45 Mol-%. Eine Vielzahl von Typen ist im Handel erhältlich. Beispielsweise sei auf die Firmenschrift "Introduction to Kuraray EVAL™ Resins", Version 1.2/9810 der Firma Kuraray EVAL Europe verwiesen.

Das EVOH wird in der Regel durch Verseifen von Ethylen-Vinylacetat-Copolymeren hergestellt. Aus Gründen der besseren Verarbeitbarkeit kann als EVOH erfindungsgemäß auch ein teilverseiftes Ethylen-Vinylacetat-Copolymer eingesetzt werden, bei dem die Verseifung zu mindestens 60 %, bevorzugt zu mindestens 80 % und besonders bevorzugt zu mindestens 90 % durchgeführt wurde. Eine bessere Verarbeitbarkeit kann auch durch Zumischen von Polyvinylacetat, Ethylen-Polyvinylacetat-Copolymeren oder Polyamiden erzielt werden. Darüber hinaus kann die EVOH-Formmasse alle aus dem Stand der Technik bekannten weiteren Zusätze enthalten, beispielsweise auch Schichtsilikate. Der Anteil an EVOH in der Formmasse sollte mindestens 50 Gew.-%, bevorzugt mindestens 60 Gew.-%, besonders bevorzugt mindestens 75 Gew.-% und ganz besonders bevorzugt mindestens 90 Gew.-% betragen.

Geeignete Haftvermittler für die Verbindung der Schicht I mit einer Schicht II sind beispielsweise aus der EP-A-0 509 211, der EP-A-0 837 088 sowie der EP-A-1 065 048 bekannt, deren Offenbarung ausdrücklich mit einbezogen ist.

Geeignete Haftvermittler für die Verbindung der Schicht I mit einer Schicht IV sind beispielsweise Blends aus Polyester und Polyolefm bzw. funktionalisiertem Polyolefin, gegebenenfalls mit Zusatz eines Verträglichkeitsvermittlers wie eines Polyamin/Polyamid-Copolymers (EP-A-1 065 048).

Geeignete Haftvermittler für die Verbindung der Schicht I mit einer Schicht V sind beispielsweise aus der EP-A-0 117 622 bekannt, deren Offenbarung ausdrücklich mit einbezogen ist. Darüber hinaus sind Blends aus dem in der Schicht I verwendeten Polyester sowie einem mit EVOH verträglichen Polyamid (z. B. PA6, PA66 oder Copolymere hiervon) geeignet, gegebenenfalls unter Zusatz eines Verträglichkeitsvermittlers wie z. B. eines Polyamid-Polyester-Blockcopolymeren; alternativ können auch gemäß EP-A-1 065 048 Polyamin-Polyamid-Copolymere als Haftvermittler verwendet werden, gegebenenfalls unter Zusatz eines mit EVOH verträglichen Polyamids und/oder des in der Schicht I verwendeten Polyesters.

Alle diese Haftvermittler liegen als separate Schicht vor, die beispielsweise durch Coextrusion mit den übrigen Schichten gebildet wird.

Das erfmdungsgemäße Leitungssystem bzw. dessen einzelne Elemente lässt sich kostengünstig herstellen. Es hat darüber hinaus auch ein geringes Gewicht, was gerade bei mobiler Verwendung von Vorteil ist.

Die Erfindung bezieht sich auch auf ein Brennstoffzellensystem, das ein erfmdungsgemäßes Element enthält, beispielsweise für den Antrieb eines Kraftfahrzeugs.

## Patentansprüche

1. Element eines Leitungssystems einer Brennstoffzelle,
**dadurch gekennzeichnet,**
**dass** die innerste Schicht I, die mit dem geförderten Medium in Kontakt steht, aus einer Polyesterformmasse besteht und darüber hinaus mindestens eine weitere Schicht vorhanden ist, die ausgewählt ist aus
a) einer Schicht II aus einer Polyamidformmasse,
b) einer Schicht III aus einer Formmasse aus einem funktionalisierten Polyolefin,
c) einer Schicht IV aus einer Polyolefinformmasse, bei der das Polyolefin nicht funktionalisiert ist
sowie
d) einer Schicht V aus einer EVOH-Formmasse.

2. Element eines Leitungssystems einer Brennstoffzelle gemäß Anspruch 1,
**dadurch gekennzeichnet,**
**dass** es ein Mehrschichtrohr, ein Vorratsgefäß, ein Anbindungselement, ein Adapter, ein Filter, ein Bauteil einer Pumpe oder ein Bauteil eines Ventils ist.

3. Element eines Leitungssystems einer Brennstoffzelle gemäß einem der vorhergehenden Ansprüche,
**dadurch gekennzeichnet,**
**dass** die Polyesterformmasse auf einem Polyester basiert, der ausgewählt ist aus Polyethylenterephthalat, Polypropylenterephthalat, Polybutylenterephthalat, Polyethylen-2.6-naphthalat, Polypropylen-2.6-naphthalat, Polybutylen-2.6-naphthalat, Poly(1.4-dimethylencyclohexanterephthalat und Poly(1.4-dimethylencyclohexan-2.6-naphthalat).

4. Element eines Leitungssystems einer Brennstoffzelle gemäß einem der vorhergehenden Ansprüche,
**dadurch gekennzeichnet,**
**dass** die Polyesterformmasse antielektrostatisch ausgerüstet ist.

5. Brennstoffzellensystem, das ein Element gemäß einem der vorhergehenden Ansprüche enthält.

6. Brennstoffzellensystem für den Antrieb eines Kraftfahrzeugs, das ein Element gemäß einem der Ansprüche 1 bis 4 enthält.
